# NEW EUROPEAN PATENT SPECIFICATION

(11) **EP 3 259 530 B2**
(45) Date of publication and mention of the opposition decision: **07.02.2024**
(45) Mention of the grant of the patent: 27.05.2020
(21) Application number: 16751974.3
(22) Date of filing: 18.02.2016
(51) Int. Cl.: F23K 1/00, F23K 3/00, F23N 1/00, F23N 5/18, B65G 47/46, F23G 7/10

(54) **CONTROL SYSTEM FOR CONTROLLING FEED OF SOLID FUEL IN A COMBUSTION PROCESS**
STEUERUNGSSYSTEM ZUR STEUERUNG DER ZUFUHR VON FESTEM BRENNSTOFF IN EINEM VERBRENNUNGSPROZESS
SYSTÈME DE COMMANDE POUR LA COMMANDE DE L'ALIMENTATION D'UN PROCESSUS DE COMBUSTION EN COMBUSTIBLE SOLIDE

(30) Priority: 19.02.2015 FI 20155111
(43) Date of publication of application: 27.12.2017
(60) Divisional application: 20176546.8
(73) Proprietor: Inray Oy, 50100 Mikkeli (FI)
(72) Inventor: MUINONEN, Mika, 50970 Mikkeli (FI); KOVANEN, Janne, 50970 Mikkeli (FI)
(74) Representative: Väänänen, Janne Kalervo
(86) International application number: PCT/FI2016/050102
(87) International publication number: WO 2016/132017

(56) References cited:
- EP-A1- 2 141 414
- EP-A2- 0 344 757
- EP-A2- 0 344 757
- EP-A2- 0 415 582
- EP-A2- 0 415 582
- WO-A1-2013/177350
- WO-A2-2014/065768
- JP-A- 2015 045 463
- US-A- 4 521 139
- US-A- 4 521 139
- US-A- 4 540 129
- US-A- 4 540 129
- US-A1- 2002 050 236
- US-A1- 2002 050 236
- US-A1- 2013 079 922
- US-A1- 2013 079 922
- US-A1- 2013 312 321
- US-B2- 8 640 633
- US-B2- 8 640 633

## Description

### Technical field

The application relates generally to a control system for controlling the feed of a solid fuel in a combustion process.

### Background

Some of the solid fuel, e.g. peat, woodchips or sawdust, arriving at heating and power facilities for use in a combustion process, is unloaded on the field from where the fuel is loaded by a bucket loader onto a conveyor either directly or in such a way that various types of fuel are blended with visual inspection, e.g. in amongst bark is admixed dry cutter shavings.

On the other hand, some of the incoming fuel is unloaded directly into the facility's reception pockets, wherefrom it is conducted on conveyors into silos according to fuel type information inputted into the system with a truck scale by a fuel supplier or without more precise information about the type of fuel. Alternatively, all fuels arrive at a reception station, wherefrom the fuel proceeds into storage silos or buildings. Fuel fractions are blended at reception on the basis of just type information, or the mixing is carried out in storage spaces where the fuel is unloaded into a stack and removed with transverse screws from a bottom of the stack. In a storage space, peat can be placed on one side of the storage space and all types of wood chips elsewhere, but the most common practice is to place all fuel types in disarray.

Some prior art examples are presented in patent publications US 8,640,633 and US 4,540,129. EP 0 415 582 discloses a control system according to the preamble of claim 1.

### Summary

It is one objective of the invention to eliminate some of the problems of the prior art and to control a solid fuel combustion process in view of reducing the quality fluctuations of a solid fuel to be supplied into a boiler, thereby facilitating e.g. the regulation of a combustion process, improving the efficiency of an incineration plant, reducing operating and maintenance costs with a declining corrosion effect, as well as reducing greenhouse, CO, NOx and the like emissions.

The one objective of the invention is attained with the subject-matter according to the independent claim.

The control system according to one embodiment of the invention is a control system according to claim 1.

The term solid fuel is used e.g. in reference to biofuels to be burned in heating and/or power facilities, e.g. wood chips, e.g. whole tree chips, forest residue chips, stump chips and recycled woodchips; wood dust, e.g. sawdust and cutter swart; bark, peat, recycled fuels, e.g. REF, RDF and SRF; wood briquettes, wood pellets, field biomasses, e.g. straw and reed canary grass; coal and side flows of pulp and paper industry.

The term communications link is used e.g. in reference to a wired and/or wireless communication connection between devices capable of data connection. The wired link can be e.g. a USB (Universal Serial Bus) link, an Ethernet connection or some other link with an ability to communicate signals via wires, fibers or other landline media. The wireless link can be e.g. a short range wireless connection, e.g. a Bluetooth, Wi-Fi, wireless USB or some other wireless connection. The communications link can be established by means of at least one of the following communication networks; Internet, extranet and intranet; a mobile communication network which uses e.g. GSM, EDGE, UMTS, CDMA or WCDMA technology; or a public switched telephone network.

The term online measurement is used e.g. in reference to continuous measuring devices which make use of X-ray, microwave, infrared and magnetic resonance technology. In addition, reference can be made e.g. to a measurement based on devices using electrical capacitance or conductance, ultrasound acoustic, laser and video imaging.

Other embodiments are presented in the dependent claims.

### Brief description of the figures

In a detailed description of the figures, various embodiments of the invention will be discussed more precisely with reference to the accompanying figures, in which
- fig. 1a: shows a control system, wherein fuel is temporarily stored in a storage silo,
- fig. 1b: shows a control system, wherein fuel is conveyed from a reception unit directly into feeding silos, and
- fig. 2: functional elements of a control unit.

### Detailed description of the figures

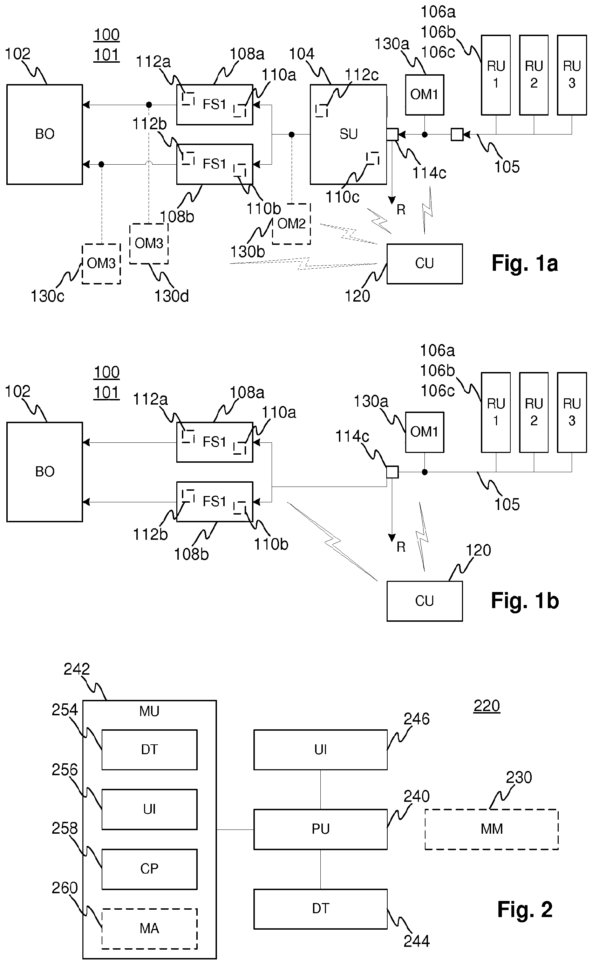

Fig. 1 a shows a control system 100 used in an incineration plant 101 intended for the production of energy, e.g. in a heating and/or power facility, for controlling the feed of a solid fuel, e.g. a biofuel such as woodchips, in its combustion process.

The facility 101 comprises at least one reception unit 106a, 106b, 106c for a fuel to be burned, which comprises e.g. at least one indoor or outdoor reception pocket, wherein fuel carrying trucks may dump their loads or wherein the fuel stored elsewhere can be loaded by bucket loaders. Pockets included in the unit 106a, 106b, 106c may vary in number but if peat is employed as a fuel, it can have its own pocket.

The facility 101 comprises a boiler 102 for burning fuel and producing energy.

The facility 101 may further comprise conveying means 105, e.g. belt, chain, screw, scraper, lamella or elevator (belt-chain) conveyors, vibratory feeders or stoker dischargers, for conveying fuel from the unit 106a, 106b, 106c towards the boiler 102 after being removed from the unit 106a, 106b, 106c e.g. with drag chain and/or stoker dischargers.

The facility 101 further comprises at least one fuel silo 104, 108a, 108b between the unit 106a, 106b, 106c and the boiler 102. The storage silo (storage) 104 is used for the interim storage of fuel prior to its transfer into at least one feeding silo 108a, 108b. The feeding silo(s) 108a, 108b is (are) used for storage of fuel prior to its delivery into the boiler 102.

Each silo 104, 108a, 108b comprises feeding means 110a, 110b, 110c, e.g. drag chain and/or belt conveyors, for supplying the silo 104, 108a, 108b with fuel arriving by way of the conveying means 105. Alternatively, the conveying means 105 may also carry out a function of the feeding means 110a, 110b, 110c.

Each silo 104, 108a, 108b comprises discharging means 112a, 112b, 112c, e.g. a discharge screw(s), and stoker and/or drag chain bottom dischargers present on a bottom of the silo 104, 108a, 108b for conveying fuel onto the discharging screw(s) in view of discharging fuel from the silo 104, 108a, 108b onto the conveying means 105.

In addition, each silo 104, 108a, 108b may comprise separate or joint control means capable of communicating by way of a communications link to the feeding means 110a, 110b, 110c and to the discharging means 112a, 112b, 112c.

The facility 101 may further comprise removal means 114c, e.g. a removal gate or a screw conveyor with a reversible discharge direction, for clearing the conveying means 105 or the combustion process of fuel which for some reason is rejected as unacceptable for the combustion process.

The facility 101 may further comprise control elements for the removal means 114c, which are capable of communicating by way of a communications link.

The system 100 comprises a control unit 120 which is capable of communicating in the system 100 by way of a communications link, e.g. wirelessly by way of a mobile communication network as shown in the figure.

The system 100 further comprises at least one set of online quality measuring instruments 130a, 130b, 130c, 130d, which are capable of communicating with the unit 120 by way of a communications link. Making use of the online quality measurement of fuel enables an enhancement of the facility 101 in terms of its production.

The system 100 may comprise merely the first set of measuring instruments 130a, e.g. X-ray measuring instruments, which are installed in connection with the conveying means 105 between the unit 106a, 106b, 106c and the silo 104. The measuring instruments 130a can be installed as shown in the figure, or by 25 having the same installed in connection with each of the designated conveyor means 105 coming from each pocket of the unit 106a, 106b, 106c.

The measuring instruments 130a monitor the fuel (a batch of fuel) carried on the conveying means 105 by continuous measuring and supply the unit 120 with fuel-related measurement data obtained from the measurement.

The unit 120 receives measurement data from the measuring instruments 130a and is able to continuously calculate from the measurement data at least one of the fuel quality criteria (quality data): type of fuel, moisture content, foreign matter content, ash content, at least one element concentration, energy content, density, mass, and fragment size.

In addition, the unit 120 may control the removal means 114c by way of a communications link for removing the fuel measured with the measuring instruments 130a, on the basis of the received measurement data and the at least one calculated criterion thereof, from the conveying means 105 prior to feeding it into the silo 104.

The unit 120 is additionally able to establish a real-time content model for the silo 104, e.g. two- or three-dimensional model, about its fuel distribution on the basis of at least one of the aforesaid criteria, e.g. the energy content, to maintain the established content model and to update it in real time according to fuel being supplied and discharged.

In the content model, it is possible to utilize not only the at least one criterion but also e.g. at least one of the following data: operating data for the conveyor means 105, identification data for fuel loads, e.g. information about a supplier, a type and/or a location, information about a truck scale used for determining the amount of a fuel load and other possible information obtainable from auxiliary measurements, e.g. operating data for a belt scale and/or other equipment.

The unit 120 further controls feeding means 110c of the silo 104 by way of a communications link for feeding the measured fuel from the conveying means 105 into the silo 104. Based on the content model and the measurement data received from the measuring instruments 130a, the feeding means 110c are supplied with control information regarding to which part of the silo 104 the fuel is to be delivered.

In addition, the unit 120 controls discharging means 112c by way of a communications link for discharging fuel onto the conveying means 105 extending from the silo 104 to the silo 108a, 108b. Based on the content model and the possibly received measurement data, the discharging means 112c are 30 supplied with control information regarding from which part of the silo 104 the fuel is to be discharged onto the conveying means 105.

Moreover, the unit 120 is able to receive information about upcoming fuel loads, e.g. information about suppliers, fuel type, place of delivery, and scale data.

The system 100 may comprise second measuring instruments 130b, e.g. X-ray measuring instruments, which are installed in connection with the conveying means 105 between the silo 104 and the silo 108a, 108b.

The unit 120 may receive measurement data from the measuring instruments 130b and it may calculate continuously from the discussed measurement data at least one of the aforesaid criteria, e.g. the energy content.

In addition, the unit 120 is able to establish a real-time content model for each silo 108a, 108b, e.g. a two- or three-dimensional model, about its fuel distribution on the basis of the at least one aforesaid criterion, to maintain the established content model and to update it in real time according to fuel being supplied and discharged.

The unit 120 further controls the feeding means 110a, 110b for the silo 108a, 108b by way of a communications link for feeding fuel into the silo 108a, 108b. Based on the content model and the measurement data received from the measuring instruments 130b, the conveying means 105 are supplied with control information regarding into which silo 108a, 108b the fuel to be conveyed and the feeding means 110a, 110b are supplied with control information regarding to which part of the silo 108a, 108b the fuel is to be delivered.

In addition, the unit 120 controls the discharging means 112a, 112b of the silo 108a, 108b by way of a communications link for discharging fuel onto the conveying means 105 extending from the silo 108a, 108b to the boiler 102. Based on the content model and based on measurement data possibly received from the measuring instruments 130b, the discharging means 112a, 112b are supplied with control information regarding from which part of the silo 108a, 108b the fuel is to be discharged onto the conveying means 105.

Controlling the feeding and discharging means 110a, 110b, 110c, 112a, 112b, 112c of each silo 104, 108a, 108b enables an improvement in the quality of a fuel passing into the boiler 102, i.e. an effort to provide a fuel with quality as consistent as possible, whereby it is optimal from the standpoint of a combustion process.

Also, the control enables an optimization of fuel mixtures. The optimization of mixture ratios is a way of avoiding the feeding of expensive additives, e.g. elemental sulfur and sulfates, into the boiler 102 in case there is a risk of chlorine-induced corrosion.

In addition, the control enables a protection of the boiler 102 by avoiding undesired fuel blends which increase the corrosion risk.

The control further provides an ability to maintain the boiler 102 and a turbine in optimal operation (boiler-turbine balance), to reduce emissions and to improve the efficiency of a combustion process.

By virtue of its on line measurement, the system 100 is capable of supplying and controlling the supply of fuel.

In addition, the unit 120 is able to transmit, by way of a communications link, fuel demand information based on a content model of the silo 104 and/or the silo 108a, 108b to a unit in charge of the supply of fuel, e.g. to at least one supply program of the unit 120 or some other computer. The demand information makes it possible to report which fuel fractions are needed in the facility 101 for maintaining an optimal fuel distribution.

The unit 120 may further receive predictions from fuel supply programs regarding upcoming fuel loads, thereby enabling the establishment of demand data also on the basis of e.g. predictions and a content model.

The system 100 may comprise third measuring instruments 130c, 130d, e.g. Xray measuring instruments, which are installed in connection with the conveying means 105 between each silo 108a, 108b and the boiler 102.

In addition, the system 100 may comprise control means, which control the combustion process of the boiler 102 and which are capable of communicating by way of a communications link.

The unit 120 is able to receive measurement data from the measuring instruments 130c, 130d and is able to calculate continuously from the discussed measurement data at least one of the aforesaid criteria, e.g. the energy content.

In addition, the unit 120 is able to transmit information pertinent to measurement data received from the measuring instruments 130c, 130d, e.g. measurement data or information about a calculated criterion, to the control means of the combustion process of the boiler 102.

Fig. 1 b shows a facility 101 similar to that of fig. 1 a but missing the silo 104 serving as an intermediate storage.

The system 100 only comprises measuring instruments 130a, e.g. X-ray measuring instruments, which are installed in connection with the conveying means 105 between the unit 106a, 106b, 106c and the silo 108a, 108b.

The measuring instruments 130a measure continuously a fuel carried on the conveying means 105 and supply the unit 120 with fuel-related measurement data obtained from the measurement.

The unit 120 receives measurement data from the measuring instruments 130a and is able to calculate continuously from the discussed measurement data at least one the aforesaid criteria, e.g. the energy content.

The unit 120 is able to control the discharge means 114c, to establish a content model about its fuel distribution on the basis of at least one of the aforesaid criteria, e.g. the energy content, to maintain and update the established content model as in the system 100 of fig. 1.

In addition, the unit 120 is able to control feeding means 11 Oa, 11 Ob and discharging means 112a, 112b for the silo 108a, 108b as in the system 100 of fig. 1.

The unit 120 is further able to transmit fuel demand information based on a content model of the silo 108a, 108b as in the system 100 of fig. 1.

By virtue of its on line measurement, the system 100 is capable of controlling the supply of fuel for the facility 101.

The system 100 is easy to install in old facilities 101, its operation is not restricted by fuel employed in the facility 101, and it is not bound up with the employed measuring method.

By virtue of the system 100, the facility 101 has accurate initial data about the quality of fuel, thus enabling to make an optimal fuel mixture of consistent quality. The quality fluctuations of fuel, regarding e.g. moisture, complicate adjustment of the boiler 102, whereby the bed temperatures fluctuate with resulting emission spikes, the efficiency suffers, and the corrosion risk increases. By virtue of the system, it is further possible to obviate production losses e.g. in winters when the entire production capacity of the facility 101 is needed.

Fig. 2 shows functional units 240, 242, 244, 246 for a control unit (control device) 220 that may comprise at least one computer.

The unit 220 comprises a processor unit 240, which comprises at least one processor and which enables the execution of instructions, defined e.g. by a user or some application program, and the processing of data.

In addition, the unit 220 comprises a memory unit 242, which comprises at least one memory, for storing and saving data, e.g. instructions and application programs.

In addition, the unit 220 comprises a data transfer unit 244 by means of which the unit 220 transmits and receives information by way of at least one wired and/or wireless communications link, and a user interface unit 246 by means of which the user is able to input commands and information to the unit 20 220 and/or to receive information from the unit 220.

The user interface unit 246 may comprise at least one of the following: a keyboard, functional keys, a display, a touchpad, a touch screen, and a microphone/speaker unit.

The memory unit 242 may comprise an application 254 controlling operation of the data transfer unit 244, and an application 256 controlling operation of the user interface unit 246, and the memory unit comprises an application (computer program) 258 intended for controlling operation of the unit 220.

In addition, the memory unit 242 may comprise an application 260 controlling operation of the online quality measuring instruments 230 in the event that the 30 measuring instruments 230 are remote-controlled from the unit 220.

The application 258 controls operations of the unit 220 and possibly other equipment 102, 104, 108a, 108b, 230 in the feed of a solid fuel in a combustion process when it is carried out in the unit 220. The application 258 comprises a reception code which uses the data transfer unit 244 to receive from 5 the measuring instruments 230, by way of a communications link, online measurement data regarding a fuel coming in from the fuel unit 106a, 106b, 106c, and a control code which uses the data transfer unit 244 to control, by way of a communications link, the feeding means 110a, 110b, 110c for delivering the measured fuel into the silo 104, 108a, 108b on the basis of its content model and measurement data.

The application 258 can be stored not only in the memory unit 242 of the unit 220 but also in a computer program product, which is a computer-readable data transfer medium, e.g. a CD disc or a USB flash drive, and which comprises a computer program code intended to be run on a computer.

The memory unit 242 and the application 258, jointly with the processor unit 240, enable the unit 220 at least to receive with the data transfer unit 244 from the measuring instruments 230, by way of a communications link, measurement data regarding a fuel coming from the fuel unit 106a, 106b, 106c and to control with the data transfer unit 244, by way of a communications link, the feeding means 110a, 110b, 110c for delivering the measured fuel into the silo 104, 108a, 108b on the basis of its content model and measurement data.

In addition, the memory unit 242 and the application 258, jointly with the processor unit 220, enable the unit 220 to execute other functions of the unit 220 presented in connection with figs. 1 a and 1 b.

Described above are just a few embodiments of the invention. The principle according to the invention can naturally be varied within the scope protection defined in the claims, regarding for example implementation details as well as fields of use.

## Claims

1. A control system (100) for controlling a feed of a solid biofuel in a combustion process, comprising
a control unit (120, 220),
first online measuring instruments (130a, 130b, 130c, 130d, 230),
a fuel reception unit (106a, 106b, 106c),
a fuel silo (104, 108a, 108b), and
silo feeding and discharging means (110a, 110b, 110c, 112a, 112b, 112c),
wherein the control unit is adapted
to communicate in the system by way of a communications link,
to receive from the first online measuring instruments online measurement data regarding a fuel coming from the fuel reception unit,
to calculate continuously from the measurement data at least one criterion of the fuel, and
to establish a content model of a fuel distribution of the fuel silo on a basis of the at least one criterion,
**characterized in that**
the control unit informs the silo feeding means (110a, 110b, 110c) on a basis of its content model and the measurement data to which part of the silo the measured fuel is delivered, and the silo discharging means (112a, 112b, 112c) on a basis of at least the content model from which part of the silo fuel is discharged, and wherein said content model is at least a two-dimensional content model,
wherein the first online measuring instruments (130a) are installed in connection with conveying means (105) between a reception unit and the fuel silo (104), and the control unit controls discharging means (114c) for removing the measured fuel from the conveying means prior to its delivery into the fuel silo on the basis of the measurement data received from the first measuring instruments (130a), said fuel silo (104) being a storage silo, and
the system further comprises second measuring instruments (130b) which are installed in connection with conveying means between the storage silo and at least one feeding silo (108a, 108b), and wherein the control unit is adapted to control feeding means (110a, 110b) for the at least one feeding silo for the delivery of fuel on the basis of the content model and measurement data received from the second measuring instruments.

2. The system according to claim 1, wherein the control unit transmits fuel demand information on the basis of the content model to a unit in charge of a supply of fuel.

3. The system according to claim 1, which further comprises third measuring instruments (130c, 130d), which are installed in connection with conveying means between at least one feeding silo and a fuel boiler (102), and control means, which control a combustion process of the fuel boiler, and wherein the control unit supplies the control means of the fuel boiler with information pertinent to measurement data received from the third measuring instruments.

## Patentansprüche

1. Steuersystem (100) zum Steuern einer Zufuhr eines festen Biobrennstoffs in einem Verbrennungsprozess, umfassend
eine Steuereinheit (120, 220),
erste Online-Messinstrumente (130a, 130b, 130c, 130d, 230),
eine Brennstoffaufnahmeeinheit (106a, 106b, 106c),
ein Brennstoffsilo (104, 108a, 108b), und
Silozufuhr- und -abgabemittel (110a, 110b, 110c, 112a, 112b, 112c),
wobei die Steuereinheit so angepasst ist,
dass sie in dem System über eine Kommunikationsverbindung kommuniziert,
um von den erste Online-Messinstrumenten Online-Messdaten bezüglich eines von der Brennstoffaufnahmeeinheit kommenden Brennstoffs zu empfangen,
um aus den Messdaten kontinuierlich mindestens ein Kriterium des Brennstoffs zu berechnen und
ein Inhaltsmodell einer Brennstoffverteilung des Brennstoffsilos auf der Basis des mindestens einen Kriteriums zu erstellen,
**dadurch gekennzeichnet, dass**
die Steuereinheit die Silozufuhrmittel (110a, 110b, 110c) auf der Grundlage ihres Inhaltsmodells und der Messdaten informiert, zu welchem Teil des Silos der gemessene Brennstoff geliefert wird, und die Siloabgabemittel (112a, 112b, 112c) auf der Grundlage mindestens des Inhaltsmodells, aus welchem Teil des Silos Brennstoff abgegeben wird, und wobei das Inhaltsmodell mindestens ein zweidimensionales Inhaltsmodell ist,
wobei die erste Online-Messinstrumente (130a) in Verbindung mit Fördermitteln (105) zwischen einer Aufnahmeeinheit und dem Silo installiert sind und die Steuereinheit Abgabemittel (114c) zum Entfernen des gemessenen Brennstoffs von den Fördermitteln vor seiner Abgabe in das Silo auf der Grundlage von Messdaten steuert, die von den ersten Messinstrumenten (130a) empfangen werden, wobei das Silo ein Lagersilo (104) oder mindestens ein Zufuhrsilo (108a, 108b) ist, und
das System ferner zweite Messinstrumente (130b) umfasst, die in Verbindung mit Fördermitteln zwischen einem Lagersilo und mindestens einem Zufuhrsilo installiert sind, und wobei die Steuereinheit so ausgelegt ist, dass sie Zufuhrmittel (110a, 110b) für mindestens ein Zufuhrsilo für die Lieferung von Brennstoff auf der Grundlage des Inhaltsmodells und der von den zweiten Messgeräten erhaltenen Messdaten steuert.

2. System nach Anspruch 1, wobei die Steuereinheit auf der Grundlage des Inhaltsmodells Informationen über den Brennstoffbedarf an eine Einheit übermittelt, die für eine Bereitstellung des Brennstoffs zuständig ist.

3. System nach Anspruch 1, das ferner dritte Messinstrumente (130c, 130d), die in Verbindung mit Fördermitteln zwischen mindestens einem Zufuhrsilo und einem Brennstoffkessel (102) installiert sind, und Steuermittel, die einen Verbrennungsprozess des Brennstoffkessels steuern, umfasst, und wobei die Steuereinheit die Steuermittel des Brennstoffkessels mit Informationen versorgt, die für die von den dritten Messinstrumenten erhaltenen Messdaten relevant sind.

## Revendications

1. Système de commande (100) pour commander une alimentation d'un biocarburant solide dans un procédé de combustion, comprenant
une unité de commande (120, 220),
des premiers instruments de mesure en ligne (130a, 130b, 130c, 130d, 230),
une unité de réception de carburant (106a, 106b, 106c),
un réservoir de carburant (104, 108a, 108b), et
des moyens d'alimentation et de déchargement de réservoir (110a, 110b, 110c, 112a, 112b, 112c),
dans lequel l'unité de commande est adaptée
pour communiquer dans le système au moyen d'un lien de communication,
pour recevoir, venant des premiers instruments de mesure en ligne, des données de mesure concernant un carburant arrivant de l'unité de réception de carburant,
pour calculer en continu au moins un critère du carburant à partir des données de mesure, et
pour établir un modèle de contenu d'une distribution de carburant du réservoir de carburant en se basant sur l'au moins un critère,
**caractérisé en ce que**
l'unité de commande informe les moyens d'alimentation de réservoir (110a, 110b, 110c) en se basant sur son modèle de contenu et les données de mesure, à quelle partie du réservoir le carburant mesuré est fourni, et les moyens de déchargement de réservoir (112a, 112b, 112c) en se basant sur au moins le modèle de contenu à partir duquel une partie du carburant de réservoir est déchargée, et dans lequel le modèle de contenu est au moins un modèle de contenu bi-dimensionnel,
dans lequel des premiers instruments de mesure en ligne (130a) sont installés en connexion avec un moyen de transport (105) entre une unité de réception et le réservoir, et l'unité de commande commande les moyens de décharge (114c) pour retirer le carburant mesuré du moyen de transport avant sa fourniture dans le réservoir en se basant sur des données de mesure reçues des premiers instruments de mesure (130a), ledit silo étant un réservoir de stockage (104) ou au moins un réservoir d'alimentation (108a, 108b), et
le système comprend en outre des deuxièmes instruments de mesure (130b) qui sont installés en connexion avec des moyens de transport entre un réservoir de stockage et au moins un réservoir d'alimentation, et dans lequel l'unité de commande est adaptée pour commander des moyens d'alimentation (110a, 110b) pour au moins un réservoir d'alimentation pour la fourniture de carburant en se basant sur le modèle de contenu et les données de mesure reçues des deuxièmes instruments de mesure.

2. Système selon la revendication 1, dans lequel l'unité de commande transmet les informations de demande de carburant à une unité chargée d'une alimentation de carburant, en se basant sur le modèle de contenu.

3. Système selon la revendication 1, qui comprend en outre des troisièmes instruments de mesure (130c, 130d) qui sont installés en connexion avec des moyens de transport entre au moins un silo d'alimentation et une chaudière à carburant (102), et un moyen de commande, qui commande un procédé de combustion de la chaudière à carburant, et dans lequel l'unité de commande alimente le moyen de commande de la chaudière à carburant avec des informations relatives aux données de mesure reçues des troisièmes instruments de mesure.
